# EUROPEAN PATENT SPECIFICATION

(11) **EP 1 215 646 B1**
(45) Date of publication and mention of the grant of the patent: **18.04.2007**
(21) Application number: 01118291.2
(22) Date of filing: 31.07.2001
(51) Int. Cl.: G09F 9/37

(54) **Method for producing fine particles for a twisting ball display**
Verfahren und Vorrichtung zur Herstellung von feinen organischen Partikeln für eine Drehkugelanzeige
Procédé et appareil pour la fabrication de fines particules organiques pour un écran où l'affichage est obtenu par rotation de boules

(30) Priority: 20.09.2000 JP 2000284834
(43) Date of publication of application: 19.06.2002
(73) Proprietor: Stanley Electric Co., Ltd., Meguro-ku Tokyo 153-8636 (JP); SHARP CORPORATION, Osaka-shi, Osaka-fu (JP)
(72) Inventor: Iwakura, Yasushi, Tokyo 153-8636 (JP); Toko, Yasuo, Tokyo 153-8636 (JP)
(74) Representative: Schulze Horn, Kathrin

(56) References cited:
- FR-A- 2 756 196

## Description

### BACKGROUND OF THE INVENTION

### 1. Field of the Invention

The present invention relates to a method of producing fine particles used, for example, in an electric twist ball display (hereinafter abbreviated as "ETBD"). More particularly, the present invention relates to a method of producing approximately spherical fine particles of an organic material.

### 2. Discussion of Related Art

For example, an ETBD is arranged as follows. Fine particles having polarity are sandwiched between a pair of substrates provided with respective electrodes, at least one of which is transparent. The fine particles are caused to rotate in response to application of an external electric field between the electrodes. Thus, the amount of reflected light from the fine particles is controlled by the rotational motion of the fine particles to display an image. Regarding fine particles used in such an ETBD, those endowed with bipolar properties provide large rotational force relative to the applied electric field. Accordingly, the following materials are employed to produce fine particles for use in ETBDs: inorganic ferroelectric materials, e.g. PZT (Pb(TI,Zr)O₃); organic ferroelectric materials, e.g. polyvinylidene fluoride; and an electret obtained by using carnauba wax. Regarding the particle size, fine particles of the order of 20 to 300 microns are used.

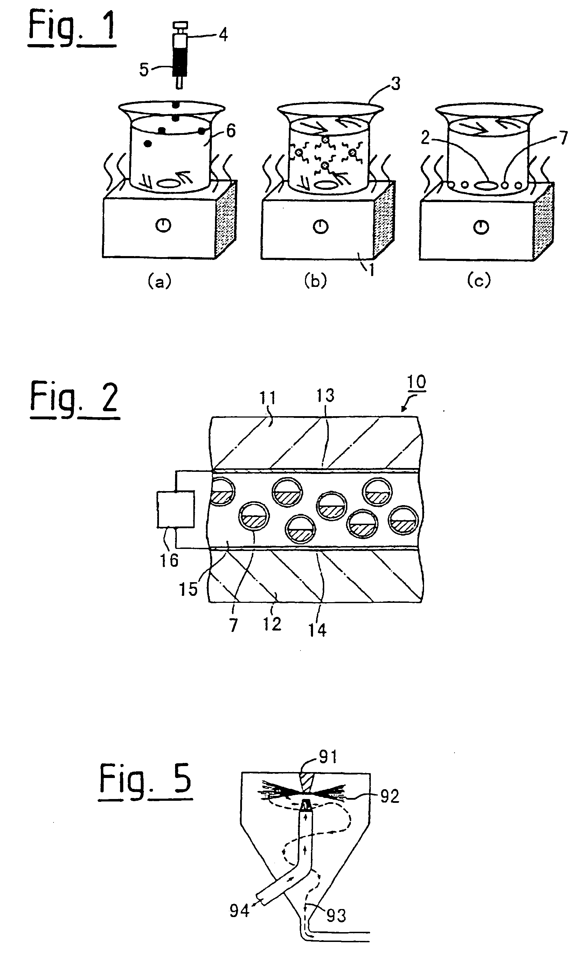

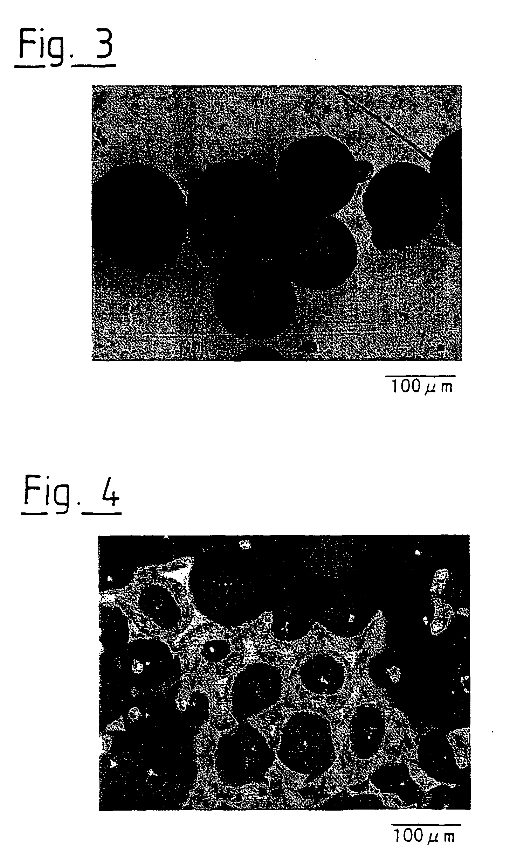

As a method of producing such fine particles, a spray drying method as shown in Fig. 5, by way of example, is known. With the spray drying method, a solution 91 containing a desired material is dispersedly sprayed in heated air 94, whereby fine droplets 92 of the material solution 91 are instantaneously dried to obtain fine particles 93. There is another known method wherein a sheet of a desired material is cut into small cubes by using a dicing saw, and the small cubes are treated in a high-speed jet, together with an abrasive, to obtain spheres [for example, see Japanese Patent Application Unexamined Publication (KOKAI) No. Hei 7-168210].

When the spray drying method is used, the resulting fine particles are likely to become porous because the solvent is evaporated rapidly. Therefore, the material tends to become brittle fine particles. In addition, the fine particles are likely to contain micro voids. Therefore, if such fine particles are used in an ETBD that displays an image by utilizing the bipolar properties of the fine particles, the micro voids may cause a loss of rotational force. Accordingly, dielectric breakdown is likely to occur upon application of an electric field.

With the method of obtaining spheres by cutting a sheet of a desired material and carrying out abrasive treatment, an unfavorably large number of particle processing steps are required, and the method needs to perform an operation for classifying the obtained particles to sort out spheres having a predetermined sphericity. Therefore, the conventional method suffers from high mass-production costs.

### SUMMARY OF THE INVENTION

The present invention was made in view of the above-described circumstances.

Accordingly, an object of the present invention is to provide a method of producing fine particles with a particle size suitable for use in an ETBD by a relatively simple process.

Another object of the present invention is to provide an electric twist ball display using the above-described fine particles.

To attain the above-described objects, the present invention provides a method of producing fine organic particles having a particle size of 20 µm to 300 µm by precipitation in a liquid. The method includes the step of preparing a precipitation liquid and a raw material solution having an organic raw material dissolved therein and the step of injecting a small amount of the raw material solution into the precipitation liquid to granulate fine organic particles in the precipitation liquid. The raw material solution is prepared by dissolving the organic raw material in a low-boiling point solvent having a lower boiling point than that of the precipitation liquid and having a higher dissolvability for the organic raw material than that of the precipitation liquid.

With this method, fine organic particles having a particle size of 20 µm to 300 µm can be granulated by a relatively simple process.

Preferably, the above-described step of granulating fine organic particles includes the step of dropping or injecting the raw material solution into the precipitation liquid flowing under control at a predetermined flow velocity.

With this process, it is possible to control the particle size even more precisely.

Preferably, the raw material solution is dropped or injected into the precipitation liquid in droplet form, and the granulated fine organic particles has a sphericity of not less than 0.7.

With this process, fine particles with a higher sphericity can be obtained.

The raw material solution may contain an additive containing a surface-active agent and/or a particulate material having a particle size not larger than 1/10 of that of the fine organic particles.

The addition of such an additive makes it possible to add properties that cannot be obtained with the organic raw material alone.

Preferably, the additive is an inorganic material exhibiting reflecting properties and having a particle size not larger than 1/100 of that of the fine organic particles.

The addition of such an inorganic material makes it possible to obtain fine organic particles improved in reflecting properties.

Preferably, the organic raw material is a ferroelectric material, a piezoelectric material, a pyroelectric material, or a material capable of being formed into an electret by an electric field treatment.

The use of such an organic raw material makes it possible to obtain fine organic particles excellent in bipolar properties.

In addition, the present invention provides an electric twist ball display including fine organic particles granulated by the above-described method. The fine organic particles are sandwiched between a pair of substrates provided with respective electrodes. The electric twist ball display further includes a driving circuit for applying pulse voltages between the electrodes.

According to the present invention, it is possible to form an electric twist ball display with reduced costs.

The above and other objects, features and advantages of the present invention will become more apparent from the following description of the preferred embodiments thereof, taken in conjunction with the accompanying drawings.

### BRIEF DESCRIPTION OF THE DRAWINGS

Fig. 1 is a schematic view illustrating production steps according to an embodiment of the present invention.
Fig. 2 is a schematic sectional view of an ETBD using fine organic particles obtained by the production process shown in Fig. 1.
Fig. 3 is a micrograph showing fine organic particles obtained by a production process according to Example 1.
Fig. 4 is a micrograph showing fine organic particles obtained by a production process according to Example 3.
Fig. 5 is a schematic view illustrating an example of conventional methods of producing fine organic particles.

### DESCRIPTION OF THE PREFERRED EMBODIMENTS

Preferred embodiments of the present invention will be described below in detail with reference to Figs. 1 to 4.

Fig. 1 shows the process sequence of an embodiment of the method of producing fine particles of an organic material according to the present invention. In the figure, reference numerals denote devices or materials as follows: 1 denotes a magnetic stirrer with a temperature control mechanism; 2 denotes a rotor; 3 denotes a glass container; 4 denotes a syringe; 5 denotes a raw material solution; 6 denotes a liquid for precipitation; and 7 denotes fine organic particles 7.

As shown in part (a) of Fig. 1, the glass container 3 containing the precipitation liquid 6 is placed on the magnetic stirrer 1. The precipitation liquid 6 is stirred at a constant speed with the rotor 2 and kept at a predetermined temperature by the magnetic stirrer 1. The syringe 4 is provided directly above the glass container 3. The raw material solution 5 is dropped from the syringe 4 into the precipitation liquid 6.

The dropped raw material solution 5 is precipitated in the precipitation liquid 6, as shown in part (b) of Fig. 1, owing to the difference in solvent solubility. If the specific gravity of precipitated fine organic particles 7 is higher than that of the precipitation liquid 6, the fine organic particles 7 settle in the bottom of the glass container 3 as shown in part (c) of Fig. 1.

The raw material solution 5 is prepared by dissolving an organic raw material of the desired fine particles in a low-boiling point solvent. The term "low-boiling point solvent" as used herein means a solvent lower in boiling point than the precipitation liquid 6 and capable of dissolving the organic raw material. The low-boiling point solvent is not necessarily limited to a single solvent but may be a two-part mixed solvent consisting essentially of a first solvent and a second solvent mixed together or a mixed solvent containing three or more solvents. As a low-boiling point solvent, it is also possible to use a mixed solvent consisting essentially of a high-boiling point good solvent and a low-boiling point liquid in which no polymer will be precipitated when the high-boiling point good solvent is mixed with the low-boiling point liquid after the organic raw material has been dissolved in the good solvent.

Examples of solvents usable in the raw material solution 5 are volatile organic compounds such as acetone, acetic anhydride, n-butylamine, and tetrahydrofuran.

The raw material solution 5 may contain an additive in addition to an organic raw material dissolved in a low-boiling point solvent. If an inorganic fine powder exhibiting high reflecting properties, e.g. TiO₂, is added to the raw material solution 5, the added inorganic fine powder can be incorporated into the precipitated fine organic particles 7. If a nonionic surface-active agent is mixed into the raw material solution 5 as an additive, the surface tension of the raw material solution 5 can be changed. Thus, it is possible to reduce the particle size of the precipitated fine organic particles 7.

The organic raw material may be any compound capable of granulating the desired fine organic particles. As the organic raw material, it is possible to use various materials such as synthesized polymer resin materials and natural polymeric materials. It is preferable to use ferroelectric organic polymers, e.g. polyvinylidene fluoride, vinylidene fluoride-trifluoroethylene copolymer, and vinylidene fluoride-tetrafluoroethylene copolymer. It is also possible to use organic polymers exhibiting piezoelectric or pyroelectric properties, e.g. vinylidene cyanide-vinyl acetate copolymer, and organic compounds capable of forming an electret, e.g. carnauba wax.

As the precipitation liquid 6, a high-boiling point liquid having the property of acting as a poor solvent with respect to the raw material solution 5 is used. Because the precipitation liquid 6 has a higher boiling point than that of the solvent in the raw material solution 5, when the raw material solution 5 is mixed into the precipitation liquid 6, the solvent in the raw material solution 5 evaporates earlier than the precipitation liquid 6. Further, because the precipitation liquid 6 has a lower dissolvability for the organic raw material than that of the raw material solution 5, when the raw material solution 5 is dropped or injected into the precipitation liquid 6, the organic raw material in the raw material solution 5 is precipitated to form the fine organic particles 7.

Examples of liquids usable as the precipitation liquid 6 are silicone oil and liquid paraffin.

The particle size and shape of the fine organic particles 7 can be controlled according to need by properly selecting a low-boiling point solvent, a liquid for precipitation, and an additive and adjusting the temperature, the amount of raw material solution dropped or injected, the organic raw material concentration in the raw material solution, the rate of stirring, etc. according to the kind of organic raw material used. Mixing of the raw material solution 5 into the precipitation liquid 6 is preferably effected by dropping as illustrated in the figure. Dropping allows the raw material solution 5 to become droplets and hence permits spherical fine organic particles 7 to be readily obtained. Accordingly, it is possible to minimize variations in outer diameter of the obtained fine organic particles 7. It should be noted that the raw material solution 5 may be mixed into the precipitation liquid 6 by a method other than dropping. For example, the raw material solution 5 may be injected into the precipitation liquid 6 from a nozzle or ejected from a tube so as to enter the precipitation liquid 6.

The obtained fine organic particles 7 have minimal variations in size and shape. Thus, it is possible to obtain fine organic particles with a stabilized size of the order of 20 to 300 µm. With the method wherein the raw material solution 5 is dropped into the precipitation liquid 6, the size of the fine organic particles 7 can be controlled efficiently within the above-described range by controlling mainly the size of droplets of the raw material solution 5, the amount of the organic raw material dissolved in the raw material solution 5, temperature, and the rate of stirring. Not only spherical ones but also columnar fine particles can be granulated.

An ETBD 10 as shown in Fig. 2 was made by using fine organic particles 7 obtained by each Example (described later). The ETBD 10 has a glass substrate 11 formed with a transparent electrode 13 and a glass substrate 12 formed with a transparent electrode 14. The two glass substrates 11 and 12 are disposed to face each other across a predetermined space. Fine organic particles 7 and a lubricating transparent liquid 15 are sandwiched between the two glass substrates 11 and 12. The fine organic particles 7 have bipolar properties imparted thereto by subjecting them to an electric field treatment, e.g. corona discharge. The space between the two glass substrates 11 and 12 is set to a dimension with which the fine organic particles 7 are rotatable. It was confirmed by applying voltage pulses between the two electrodes 13 and 14 from a driving circuit 16 that the fine organic particles 7 rotated according to the polarity of the applied voltage pulses.

### (Example 1)

### Raw material solution preparing step:

One gram of polyvinylidene fluoride, which is a polymer compound exhibiting polarity, was dissolved as an organic raw material in a mixed solvent consisting essentially of 1 g of N-methyl pyrrolidinone and 4 g of acetone to obtain a raw material solution 5. Thereafter, the raw material solution 5 was filled into a syringe 4 capable of delivering a desired amount of raw material solution 5 under control.

### Precipitation liquid preparing step:

As a precipitation liquid 6, 300 ml of high-boiling point silicone oil (KF96-2S, available from Shin-Etsu Chemical Co., Ltd.) was put in the glass container 3, which was then placed on the magnetic stirrer 1. With the temperature kept at 85°C, the precipitation liquid 6 was stirred with the rotor 2 at a speed of 300 rpm.

### Fine organic particle granulating step:

Then, 0.003 ml of the raw material solution 5 at room temperature was dropped into the precipitation liquid 6 from the syringe 4 through a needle with an inner diameter of 0.3 mm. The solvent in the dropped raw material solution 5 boiled off, and the organic raw material was precipitated.

The precipitated organic raw material settled in the bottom of the glass container 3 in the form of spherical fine organic particles 7 as shown in part (c) of Fig. 1.

The fine organic particles 7 as observed with a microscope are shown in Fig. 3. Most of the fine organic particles 7 obtained by this Example had a particle size of the order of 100 to 150 µm and a sphericity of not less than 0.7. Thus, the fine organic particles 7 had a size and sphericity adequate for use in an ETBD. It should be noted that the sphericity was evaluated by using the Wadell's practical sphericity expressed in the form of ((solid volume of particle)/(volume of sphere circumscribing the particle))^{1/3}. It was possible to impart bipolar properties to the fine organic particles 7 by an electric field treatment, e.g. corona discharge.

### (Example 2)

Fine organic particles were granulated under the same conditions as in the above-described Example 1 except that 1×10⁻⁴ ml of the raw material solution was dropped through a needle with an inner diameter of 0.1 mm.

Most of the fine organic particles 7 obtained by this Example had a particle size of the order of 50 µm and a sphericity of not less than 0.7.

### (Example 3)

The raw material solution preparing step was carried out as follows. One gram of polyvinylidene fluoride was dissolved as an organic raw material in a mixed solvent consisting essentially of 1 g of N-methyl pyrrolidinone and 4 g of acetone. Further, a fine TiO₂ powder with a particle size of 70 nm, which was less than 1/100 of the particle size of fine organic particles to be obtained, was added to the mixed solvent to obtain a raw material solution 5. The fine TiO₂ powder did not dissolve in the mixed solvent but was uniformly dispersed therein.

The production steps other than the above were carried out in the same way as in Example 1 to obtain fine organic particles 7 exhibiting white reflecting properties as shown in Fig. 4. Most of the fine organic particles 7 obtained by this Example had a particle size of the order of 100 to 150 µm and a sphericity of not less than 0.7.

Because a fine powder exhibiting high reflecting properties was added, spherical fine organic particles 7 dispersedly mixed with the added high-reflectance fine powder were obtained. The fine organic particles 7 had a high diffuse reflectance of 71%. This shows a marked improvement in light-reflecting properties. Thus, the use of the fine particles in an ETBD allows an improvement in contrast. The diffuse reflectance was evaluated by using a spectrophotometer (UV-3100, available from Shimazu Seisakusho Co., Ltd.).

It should be noted that other inorganic material may be used as a reflective fine inorganic powder added to the fine organic particles. However, it is preferable to use TiO₂, which is a compound stable and excellent in white reflecting properties. Regarding the particle size, it is preferable from a practical point of view to use a fine inorganic powder having a size not larger than 1/100, more preferably not larger than 1/1000, of the size of fine organic particles to be obtained (i.e. fine organic particles as obtained without adding an additive to the raw material solution 5). If the particle size of the fine inorganic powder is larger than 1/10 of the particle size of the fine organic particles, it is likely that the fine organic particles will vary in size undesirably. In addition, the strength of the fine organic particles is likely to lower.

### (Example 4)

Fine organic particles were granulated under the same conditions as in the above-described Example 1 except that 0.01 g of SPAN80 (available from Kanto Kagaku Kogyo Co., Ltd.) was added to the raw material solution 5 as a nonionic surface-active agent. The addition of a surface-active agent causes a lowering in surface tension, which allows the droplets of the raw material solution 5 to be reduced in size. Thus, it was possible to obtain fine organic particles with a particle size of approximately 50 µm, which were smaller than the particles obtained in Example 1. It should be noted that the sphericity of the fine organic particles was not less than 0.7, which was the same as in Example 1.

Micro voids as experienced with the spray drying method were not found in any of the fine organic particles obtained by the above-described Examples. Further, an ETBD as shown in Fig. 2 was made by using the fine organic particles obtained by each of the above-described Examples, and a pulse voltage was applied between the pair of electrodes. It was confirmed that the fine organic particles rotated according to the applied pulse voltage.

Although various technically preferred limitations are added to the foregoing embodiments because these are preferred specific examples of the present invention, it should be noted that the present invention is not limited by the described embodiments, and various application examples are also included in the present invention. For example, instead of stirring the precipitation liquid in the glass container with the rotor, a flow path in which the precipitation liquid flows at a predetermined flow velocity may be formed. In this example, the raw material solution is dropped or injected at a predetermined position, and precipitated fine organic particles are continuously collected according to the position where the fine organic particles settle. Further, no color is given to the fine organic particles obtained in the foregoing embodiments. However, it will be readily conceivable for a person skilled in the art that if the fine organic particles are colored by being painted in different colors according to the polarity by a known vapor deposition method or the like, it is possible to obtain an ETBD capable of changing colors according to the rotation of the fine organic particles.

As has been stated above, according to the present invention, fine organic particles are obtained by evaporation of the solvent in the raw material solution. Therefore, fine organic particles can be obtained efficiently with a reduced number of process steps in comparison to the conventional method in which spherical fine particles are obtained from small cubes by mechanical cutting and abrasion steps. Thus, the production costs can be reduced. In addition, the shape of the fine organic particles can be controlled to a desired one such as a spherical shape of high roundness by properly adjusting granulation conditions. Further, it is possible to obtain fine organic particles free from defects such as micro voids.

With the above-described granulation method, fine organic particles with a size and shape suitable for use in an ETBD can be readily obtained. Accordingly, it is possible to achieve an improvement in display quality and cost reduction of ETBDs.

It should be noted that the present invention is not necessarily limited to the foregoing embodiments but can be modified in a variety of ways without departing from the scope of the present invention.

## Claims

1. A method of producing fine organic particles having a particle size of 20 µm to 300 µm by precipitation in a liquid, said method **characterised by** the steps of:
preparing a precipitation liquid (6) and a raw material solution (5) having an organic raw material dissolved therein; and
injecting a small amount of the raw material solution (5) into the precipitation liquid (6) to granulate fine organic particles (7) in said precipitation liquid (6);
wherein said raw material solution (5) is prepared by dissolving the organic raw material in a low-boiling point solvent having a lower boiling point than that of said precipitation liquid (6) and having a higher dissolvability for said organic raw material than that of said precipitation liquid (6).

2. The method of claim 1, wherein said step of injecting a small amount of the raw material solution (5) into the precipitation liquid (6) to granulate fine organic particles (7) includes the step of dropping or injecting the raw material solution (5) into the precipitation liquid (6) flowing under control at a predetermined flow velocity.

3. The method of claim 2, wherein said raw material solution (5) is dropped or injected into the precipitation liquid (6) in droplet form, and the granulated fine organic particles (7) have a sphericity of not less than 0.7.

4. The method of claim 1, wherein said raw material solution (5) contains an additive, said additive containing at least one of a surface-active agent and a particulate material having a particle size not larger than 1/10 of that of the fine organic particles (7).

5. The method of claim 4, wherein said additive is an inorganic material exhibiting reflecting properties and having a particle size not larger than 1/100 of that of the fine organic particles (7).

6. The method of any one of claims 1 to 5, wherein said organic raw material is one selected from the group consisting of a ferroelectric material, a piezoelectric material, a pyroelectric material, and a material capable of being formed into an electret by an electric field treatment.

7. An electric twist ball display **characterised by**:
fine organic particles granulated by the method of claim 6;
a pair of substrates (11, 12) provided with respective electrodes (13, 14), said pair of substrates (11, 12) being disposed to sandwich said fine organic particles (7) therebetween; and
driving means (16) for applying pulse voltages between said electrodes (13, 14).

## Patentansprüche

1. Verfahren zur Herstellung von feinen organischen Partikeln mit einer Partikelgröße von 20 µm bis 300 µm durch Präzipitation in einer Flüssigkeit, wobei das Verfahren **gekennzeichnet ist durch** die Schritte:
Herstellung einer Präzipitationsflüssigkeit (6) und einer Rohstofflösung (5), in der ein organischer Rohstoff gelöst ist, und
Injektion einer geringen Menge der Rohstofflösung (5) in die Präzipitationsflüssigkeit (6) zur Granulierung von feinen organischen Partikeln (7) in der Präzipitationsflüssigkeit (6),
wobei die Rohstofflösung (5) **durch** Auflösung des organischen Rohstoffs in einem Lösungmittel mit einem niedrigen Siedepunkt, das einen niedrigeren Siedepunkt als die Präzipitationsflüssigkeit (6) besitzt und in welcher der organische Rohstoff eine größere Löslichkeit als in der Präzipitationsflüssigkeit (6) besitzt, hergestellt wird.

2. Verfahren nach Anspruch 1, wobei der Schritt der Injektion einer geringen Menge der Rohstofflösung (5) in die Präzipitationsflüssigkeit (6) zur Granulierung von feinen organischen Partikeln (7) den Schritt des Zutropfens oder der Injektion der Rohstofflösung (5) in die Präzipitationsflüssigkeit (6) unter Steuerung des Flusses auf eine vorbestimmte Flussgeschwindigkeit beinhaltet.

3. Verfahren nach Anspruch 2, wobei die Rohstofflösung (5) in Tropfenform in die Präzipitationsflüssigkeit (6) zugetropft oder injiziert wird und die granulierten feinen organischen Partikel (7) eine Kugelförmigkeit von nicht weniger als 0,7 besitzen.

4. Verfahren nach Anspruch 1, wobei die Rohstofflösung (5) einen Zusatzstoff enthält, der mindestens einen oberflächenaktiven Wirkstoff oder einen partikulären Material mit einer Partikelgröße von nicht mehr als 1/10 der Größe der feinen organischen Partikel (7) enthält.

5. Verfahren nach Anspruch 4, wobei es sich bei dem Zusatzstoff um ein anorganisches Material mit reflektierenden Eigenschaften und einer Partikelgröße von nicht mehr als 1/100 der Größe der feinen organischen Partikel (7) handelt.

6. Verfahren nach einem der Ansprüche 1 bis 5, wobei der organische Rohstoff aus der Gruppe ausgewählt wird, die aus einem ferroelektrischen Material, einem piezoelektrischen Material, einem pyroelektrischen Material und einem Material, aus dem durch Behandlung mit einem elektrischen Feld ein Elektret gebildet werden kann, besteht.

7. Drehkugelanzeige, **gekennzeichnet durch**
mit dem Verfahren gemäß Anspruch 6 granulierte feine organische Partikel,
ein Substratpaar (11, 12) mit entsprechenden Elektroden (13, 14), wobei das Substratpaar (11, 12) so angebracht ist, dass es die feinen organischen Partikel (7) wie ein Sandwich in sich einschließt, und Antriebsmittel (16) zum Anlegen von Impulsspannungen an die Elektroden (13, 14).

## Revendications

1. Procédé de fabrication de fines particules organiques présentant une taille de particules de 20 µm à 300 µm par précipitation dans un liquide, ledit procédé étant **caractérisé par** les étapes consistant à :
préparer un liquide de précipitation (6) et une solution de matière première (5) contenant une matière première organique y étant dissoute ; et
injecter une petite quantité de la solution de matière première (5) dans le liquide de précipitation (6) pour granuler de fines particules organiques (7) dans ledit liquide de précipitation (6) ;
dans lequel ladite solution de matière première (5) est préparée par dissolution de la matière première organique dans un solvant à faible point d'ébullition présentant un point d'ébullition inférieur à celui dudit liquide de précipitation (6) et présentant une dissolvabilité supérieure pour ladite matière première organique que celle dudit liquide de précipitation (6).

2. Procédé selon la revendication 1, dans lequel ladite étape consistant à injecter une petite quantité de solution de matière première (5) dans le liquide de précipitation (6) pour granuler de fines particules organiques (7) comprend l'étape consistant à faire couler ou injecter la solution de matière première (5) dans le liquide de précipitation (6) s'écoulant sous contrôle à une vitesse d'écoulement prédéterminée.

3. Procédé selon la revendication 2, dans lequel ladite solution de matière première (5) est coulée ou injectée dans le liquide de précipitation (6) sous une forme de gouttelettes, et les fines particules organiques granulées (7) présentent une sphéricité supérieure ou égale à 0.7.

4. Procédé selon la revendication 1, dans lequel ladite solution de matière première (5) contient un additif, ledit additif contenant au moins un parmi un agent tensioactif et une matière particulaire présentant une taille de particules inférieure ou égale à 1/10^{ème} de celle des fines particules organiques (7) .

5. Procédé selon la revendication 4, dans lequel ledit additif est une matière minérale exhibant des propriétés réfléchissantes et présentant une taille de particules inférieure ou égale à 1/100^{ème} de celle des fines particules organiques (7).

6. Procédé selon l'une quelconque des revendications 1 à 5, dans lequel ladite matière première organique est une matière sélectionnée parmi le groupe constitué d'une matière ferroélectrique, d'une matière piézoélectrique, d'une matière pyroélectrique, et d'une matière capable d'être formée dans un électret par un traitement par champ électrique.

7. Affichage par rotation de boules électrique **caractérisé par** :
de fines particules organiques granulées par le procédé de la revendication 6 ;
une paire de substrats (11, 12) pourvue avec des électrodes respectives (13, 14), ladite paire de substrats (11, 12) étant disposée pour prendre en sandwich lesdites fines particules organiques (7) entre elle ; et
un moyen d'entraînement (16) pour appliquer des tensions d'impulsion entre lesdites électrodes (13, 14).
